# EUROPEAN PATENT SPECIFICATION

(11) **EP 1 279 262 B1**
(45) Date of publication and mention of the grant of the patent: **11.10.2006**
(21) Application number: 01925574.4
(22) Date of filing: 27.04.2001
(51) Int. Cl.: H04L 12/58, G06F 21/00

(54) **METHOD FOR REDUCING THE SPREAD OF COMPUTER VIRUSES IN AN ELECTRONIC MAIL NETWORK**
VERFAHREN ZUR REDUKTION DER VERBREITUNG VON COMPUTERVIREN IN EINEM E-MAIL-NETZWERK
TECHNIQUE PERMETTANT DE REDUIRE LA DIFFUSION DE VIRUS INFORMATIQUES DANS UN RESEAU DE COURRIER ELECTRONIQUE

(30) Priority: 05.05.2000 DE 10021686
(43) Date of publication of application: 29.01.2003
(73) Proprietor: DEUTSCHE THOMSON-BRANDT GMBH, 78048 Villingen-Schwenningen (DE)
(72) Inventor: PLATTE, Hans-Joachim, 30966 Hemmingen (DE); FLEISCHER, Wolfgang, 30171 Hannover (DE)
(74) Representative: Thies, Stephan
(86) International application number: PCT/EP2001/004747
(87) International publication number: WO 2001/086895

(56) References cited:
- WO-A-97/39399
- WO-A-99/67731
- US-A- 6 052 709

## Description

The invention relates to a method for reducing the spread of computer viruses in an electronic mail network.

### Prior art

In today's age of electronic mails and world-wide networking of computers, many forms of so-called computer viruses constitute great danger for companies operating their networked computers with connections to the electronic outside world as well. At the points of connection to the electronic outside world, such as the Internet, special computers are operated as so-called firewalls which, amongst other things, attempt to filter out emails containing electronic viruses externally before they can reach the companies' own computers. A virus is recognized by special software which, in each case, needs to be kept at the level of the latest virus patterns by the manufacturer.

However, between the appearance of a new virus and the creation and spread of a new virus pattern, a certain time elapses in which the virus can cause considerable damage. The method of virus recognition in the firewall computer is thus fundamentally susceptible. This is because, to produce a virus pattern, it is first necessary to recognize a virus, which is usually already connected to an instance of damage. If a virus is sent by the originator and is widely introduced into company networks at the same time, then damage limitation becomes a race against the time between the spread of the virus and the creation and installation of recognition programs. Particular structures mean that the virus can cause considerable damage within a few hours, which are required to create a recognition pattern, by causing the affected computers to send copies of itself to all the email addresses stored in this computer in snowball fashion, for example.

### Invention

The aim of this invention is to limit or interrupt the snowball-like forwarding chain of the virus.

The invention is achieved by means of the features specified in Claim 1.

Advantageous developments can be found in the dependent claims.

According to the invention, in a mail server having a multiplicity of connected email subscriber computers, a method is installed which is used to test emails sent in succession to the subscribers or sent in succession by the subscribers for particular commonalities, and, depending on commonalities established, either to forward the emails automatically as intended or to retain them until another criterion arises.

The criterion which can be selected for the commonality established is the occurrence of the same subject line in a plurality of emails, the occurrence of the same text content, of an attachment which is the same, and/or the same or similarly timed sending or reception time.

If an electronic mail is automatically retained on account of one or more of these criteria, the mail server can forward an email query to the sending email subscriber to determine whether he actually wants to send all emails provided with substantial commonalities, and this sending email subscriber responds to this with an explicit acknowledgement.

Preferably, the entry of an identifier or of a password can be used as an "explicit acknowledgement" from the sending email subscriber.

An alternative or a further, "different criterion" may be an email query with the administrator of the network in question to determine whether he actually wants all emails provided with substantial commonalities to be sent, and this administrator responds to this with an explicit acknowledgement.

Preferably, such characterized electronic mails may also be forwarded after a delay time has elapsed. The time delay should then advantageously be large enough for it to be possible to react to a virus warning externally, or should fall into a prescribed time frame, for example into the normal working time of the administrator.

## Claims

1. Method for reducing the spread of computer viruses in an email network, having an email server and a multiplicity of email subscriber computers connected thereto, by emails sent in succession by or to the subscribers, the email server performing the steps of:
- comparing the emails sent in succession by or to the subscribers for establishing particular commonalities; and
- depending on the established commonalities, either automatically forwarding the emails as intended, or retaining the emails until another criterion arises.

2. Method according to Claim 1, **characterized in that** the criterion used for the established commonality is the occurrence of the same subject line in a plurality of emails, the occurrence of the same text content, of an attachment which is the same, and/or the same or similarly timed sending or reception time.

3. Method according to Claim 1 or 2, **characterized in that**, if an email is automatically retained, the mail server forwards an email query to the sending email subscriber.

4. Method according to Claim 3, **characterized in that** the retained emails are sent by the mail server if the sending email subscriber acknowledges the email query by the mail server with an explicit acknowledgement.

5. Method according to Claim 4, **characterized in that** the entry of an identifier or of a password is used as an explicit acknowledgement from the sending email subscriber.

6. Method according to Claim 1, **characterized in that**, if an email is automatically retained, an email query is sent to an administrator of the email network to determine whether he actually wants all retained emails to be sent, and this administrator responds to this with an explicit acknowledgement.

7. Method according to Claim 1, **characterized in that** retained emails are forwarded after a time delay has elapsed.

8. Method according to Claim 7, **characterized in that** the time delay falls into a prescribed time frame.

## Patentansprüche

1. Verfahren zur Reduktion der Verbreitung von Computerviren in einem E-Mail-Netzwerk mit einem E-Mailserver und einer daran angeschlossenen Vielzahl von E-Mailteilnehmer-Computern durch zu den oder von den Teilnehmern nacheinander gesendete E-Mails, bei dem der E-Mailserver die Schritte ausführt:
- Vergleichen der zu den oder von den Teilnehmern nacheinander gesendeten E-Mails zum Feststellen bestimmter Gemeinsamkeiten; und
- in Abhängigkeit von den festgestellten Gemeinsamkeiten, entweder bestimmungsgemäßes automatisches Weiterleiten der E-Mails oder Zurückhalten der E-Mails bis zum Eintreten eines anderen Kriteriums.

2. Verfahren nach Anspruch 1, **dadurch gekennzeichnet, dass** als Kriterium der festgestellten Gemeinsamkeit das Auftreten der selben Betreff-Zeile in einer Mehrzahl von E-Mails, das Auftreten des selben Inhaltstextes, eines gleichen Anhangs und/oder die selbe oder zeitnahe Absende- oder Empfangszeit verwendet wird.

3. Verfahren nach Anspruch 1 oder 2, **dadurch gekennzeichnet, dass**, falls eine E-Mail automatisch zurückgehalten wird, eine E-Mail-Rückfrage durch den E-Mailserver dem absendenden E-Mailteilnehmer zugeleitet wird.

4. Verfahren nach Anspruch 3, **dadurch gekennzeichnet, dass** zurückgehaltene E-Mails durch den E-Mailserver verschickt werden, wenn der absendende E-Mailteilnehmer die E-Mail-Rückfrage durch den E-Mailserver mit einer expliziten Bestätigung bestätigt.

5. Verfahren nach Anspruch 4, **dadurch gekennzeichnet, dass** als eine explizite Bestätigung des absendenden E-Mailteilnehmers die Eingabe einer Kennung oder eines Passwortes dient.

6. Verfahren nach Anspruch 1, **dadurch gekennzeichnet, dass**, falls eine E-Mail automatisch zurückgehalten wird, eine E-Mail-Rückfrage bei einem Administrator des betreffenden E-Mail-Netzwerkes durchgeführt wird, um festzustellen, ob dieser alle zurückgehaltenen E-Mails wirklich verschickt sehen will, und dieser Administrator darauf mit einer expliziten Bestätigung antwortet.

7. Verfahren nach Anspruch 1, **dadurch gekennzeichnet, dass** zurückgehaltene E-Mails nach Ablauf einer Zeitverzögerung weitergeleitet werden.

8. Verfahren nach Anspruch 7, **dadurch gekennzeichnet, dass** die Zeitverzögerung in einen vorgegebenen Zeitrahmen fällt.

## Revendications

1. Technique permettant de réduire la diffusion de virus informatiques dans un réseau de courrier électronique, doté d'un serveur de courrier électronique et de plusieurs ordinateurs d'abonnés connectés au serveur, utilisant des courriers électroniques envoyés successivement par ou aux abonnés, le serveur de courrier électronique effectuant les étapes de :
- comparaison des courriers électroniques envoyés successivement par ou aux abonnés pour l'établissement de similitudes particulières ;
- et en fonction des similitudes établies, soit transmettre automatiquement les courriers électroniques comme prévu, ou retenir les courriers électroniques jusqu'à ce qu'un autre critère survienne.

2. Procédé selon la Revendication 1, **caractérisée en ce que** le critère utilisé pour la similitude établie, est l'occurrence de la même ligne d'objet dans plusieurs courriers électroniques, l'occurrence du même contenu de texte, d'une pièce jointe qui est identique et/ou d'une heure d'envoi ou de réception identique ou similaire.

3. Technique selon la Revendication 1 ou 2, **caractérisée en ce que**, si un courrier électronique est automatiquement retenu, le serveur de courrier électronique transmet une requête par courrier électronique à l'abonné envoyant le courrier électronique.

4. Technique selon la Revendication 3, **caractérisée en ce que** les courriers électroniques retenus avec des similitudes substantielles sont envoyés par le serveur de courrier électronique si l'abonné envoyant le courrier électronique reconnaît la requête par courrier électronique du serveur de courrier électronique par une confirmation explicite,

5. Technique selon la Revendication 4, **caractérisée en ce que** la saisie d'un identifiant ou d'un mot de passe est utilisé comme une confirmation explicite de la part de l'abonné envoyant le courrier électronique.

6. Technique selon la Revendication 1, **caractérisée en ce que**, si un courrier électronique est automatiquement retenu, une requête par courrier électronique est envoyée à un administrateur du réseau de courrier électronique pour déterminer s'il veut réellement que tous les courriers électroniques retenus soient envoyés, et cet administrateur répond à cela avec une confirmation explicite.

7. Technique selon la Revendication 1, **caractérisée en ce que** les courriers électroniques retenus sont transmis après qu'un délai de temps s'est écoulé.

8. Technique selon la Revendication 7, **caractérisée en ce que** le délai de temps se situe dans un intervalle de temps prescrit.
